# EUROPEAN PATENT SPECIFICATION

(11) **EP 3 690 976 B1**
(45) Date of publication and mention of the grant of the patent: **10.04.2024**
(21) Application number: 20152290.1
(22) Date of filing: 16.01.2020
(51) Int. Cl.: H01M 10/04, H01M 50/105, H01M 50/124, H01M 50/178, H01M 50/548, H01M 50/557

(54) **BATTERY CELL AND BATTERY**
BATTERIEZELLE UND BATTERIE
CELLULE DE BATTERIE ET BATTERIE

(30) Priority: 31.01.2019 CN 201910099632
(43) Date of publication of application: 05.08.2020
(73) Proprietor: DONGGUAN POWERAMP TECHNOLOGY LIMITED, Dongguan City, Guangdong Province 523000 (CN)
(72) Inventor: LI, SUO-CHEN, Ningde City, Fujian (CN); Liang, Wei, Ningde City, Fujian (CN)
(74) Representative: Klunker IP Patentanwälte PartG mbB

(56) References cited:
- WO-A1-2019/083303
- KR-A- 20130 004 460
- US-A1- 2013 149 600

## Description

### FIELD

The disclosure relates to batteries, and more particularly, to a battery cell and a battery.

### BACKGROUND

Since lithium-ion batteries have high energy density, long cycle life, low self-discharge, no memory effects, and high performance/price ratio, the lithium-ion batteries are widely used in various digital products, energy storage systems, and automotive power systems.

The cycling of the lithium-ion battery cell through charge and discharge is accompanied by growth and repair of the solid electrolyte interface (SEI) membrane, which requires constant consumption of electrolyte. The battery cell used in the energy storage system must have a sufficient amount of electrolyte during its cycling life. As such, the electrolyte consumed during the long cycling process can be continuously replenished. Thus, it is necessary to design a new soft-packed battery cell to increase the storage amount of the electrolyte without affecting the energy density.

To increase the storage amount of the electrolyte, the width or the length of the battery cell is increased while the total size of the battery cell is remained unchanged. However, the increase of the width or the length must sacrifice the volume energy density and affect the safety when the battery cell is abused (for example, when the battery cell undergoes a drop test). Furthermore, the unsealed region inside the soft-packed battery cell would be large, which causes unnecessary waste. Especially for the unsealed region corresponding to the protruding position of the electrode tab, utilization of the unsealed region is meaningful to the energy storage battery cell. Therefore, the soft-packed battery cell structure for energy storage needs to be optimized.

WO20019/083303A1 discloses a battery including an electrode assembly including a positive electrode sheet, a separation membrane, and a negative electrode sheet, at least one cover member surrounding at least a part of an outer most region of the electrode assembly, and exterior material accommodating the electrode assembly and the at least one cover member. the at least one cover member has at least a partial area that overlaps and is fixed to the exterior material, and includes a plurality of air gaps permitting impregnation of the electrode assembly by an electrolyte. An electronic device includes a housing, a display accommodated in the housing and having at least part exposed outside the housing, a memory disposed in the housing, a battery accommodated in the housing, and a processor electrically connected to the display, the memory, and the battery. Other various embodiments as understood from the specification are possible.

KR20130004460A discloses a lithium polymer secondary battery comprising an electrode assembly which comprises a first electrode, a separator, and a second electrode; a cover which comprises a first cover sealing the upper part of the electrode assembly, and a second cover sealing the lower part of the electrode assembly; an exterior surrounding a whole part of the electrode assembly and a part of sides of the first and second cover; and a terminal.

KR20130004460A discloses a battery pack including an electrode assembly, a pouch accommodating the electrode assembly, an electrode lead connected with the electrode assembly and extending to the outside of the pouch, alit part through which the electrode lead penetrates and a lead cover formed in the vicinity of the slit part, and an insulator covering the pouch and at least a portion of the electrode lead.

### SUMMARY

To overcome the above shortcomings, what is needed is a battery cell for increasing the storage amount of the electrolyte, thereby improving the cycle life of the battery cell.

The present disclosure provides a battery cell including an electrode assembly, a support assembly, and a packaging bag for receiving the electrode assembly and the support assembly. The electrode assembly includes a first end surface and a second end surface opposite to the first end surface. The support assembly is disposed between the packaging bag and the first end surface or the second end surface. The support assembly includes a first component and a second component opposite to the first component and detachably connected to the first component. The first component and the second component cooperate to define a cavity facing the first end surface or the second end surface. The electrode assembly further comprises an electrode tab protruding from the first end surface or the second end surface and protruding from between the first component and the second component, and the electrode tab further protruding from the cavity and the packaging bag.

In an embodiment, the first component includes a first portion and a second portion connected to the first portion, the first portion and the second portion cooperatively define a first part of the cavity, and at least one of the first portion and the second portion has a plurality of through holes.

In an embodiment, the first component further includes a reinforcing rib, one end of the reinforcing rib is connected to the first portion, and the other end of the reinforcing rib is connected to the second portion.

In an embodiment, the first component further includes two arc portions, and two ends of the first portion are connected to two ends of the second portion through the two arc portions.

In an embodiment, the first component further includes a fifth portion adjacent to the first end surface or the second end surface, the fifth portion is connected to the first portion, the second portion, or to the arc portion, and the fifth portion has a plurality of through holes.

The present disclosure further provides a battery including the battery cell of any above embodiment.

The present disclosure provides a new soft-packed battery cell, which has a space with increased size for receiving the electrolyte while the total size of the battery cell is remained unchanged. Thus, the storage amount of the electrolyte is increased without sacrificing the energy density. The requirement of a long cycle life of the battery cell for energy storage is met. Furthermore, no adhesive needs to be applied to the electrode tab of the soft-packed cell. The soldering region of the electrode tab is isolated from the aluminum plastic film, which increases the sealed and packaged performance of the energy storage battery cell during the long cycle life. The production efficiency of the battery cell is increased.

### BRIEF DESCRIPTION OF THE DRAWINGS

Implementations of the present disclosure will now be described, by way of embodiments, with reference to the attached figures.
FIG. 1A is a perspective view of an embodiment of a battery cell according to the present disclosure.
FIG. 2A is a perspective view of an embodiment of a support assembly of the battery cell according to the present disclosure.
FIG. 2B is a front view of the support assembly of FIG. 2A.
FIG. 2C is a rear view of the support assembly of FIG. 2A.
FIG. 3A is a perspective view of a first component of the support assembly of FIG. 2A.
FIG. 3B is a perspective view of a second component of the support assembly of FIG. 2A.
FIG. 3C is a rear view of the first component of FIG. 3A.
FIG. 4 is a front view of another embodiment of a first component.

### DETAILED DESCRIPTION

Implementations of the disclosure will now be described, by way of embodiments only, with reference to the drawings. The disclosure is illustrative only, and changes may be made in the detail within the principles of the present disclosure. It will, therefore, be appreciated that the embodiments may be modified within the scope of the claims.

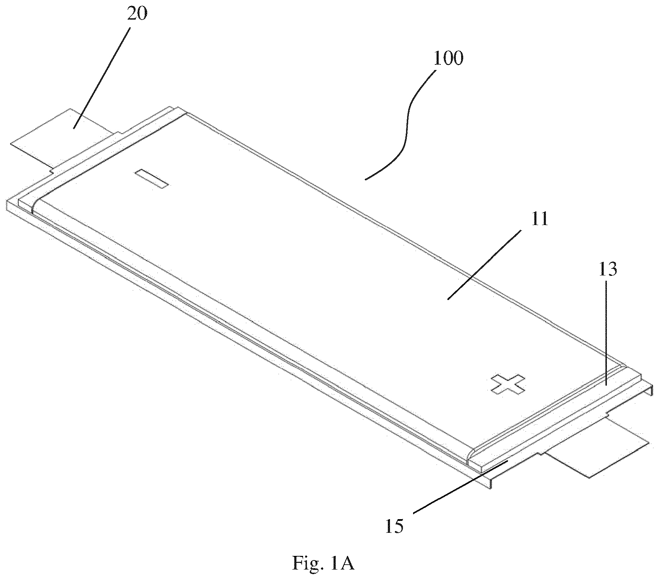

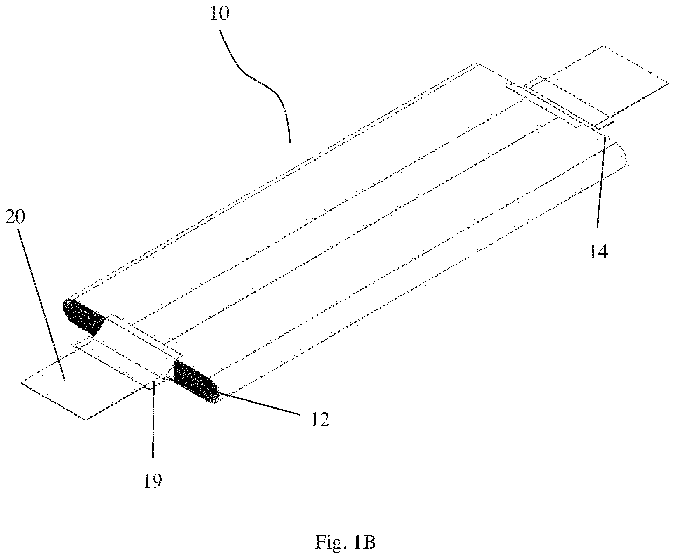

FIG. 1A is a perspective view of an embodiment of a battery cell 100 according to the present disclosure. The battery cell 100 includes an electrode assembly 10 (shown in FIG. 1B) and a packaging bag 11 for receiving the electrode assembly 10. The packaging bag 11 may be an aluminum plastic film. The electrode assembly 10 may be a wound-type as shown in FIG. 1B, and may also be a stacked-type. FIG. 1B illustrates the electrode assembly 10 after soldering, which leaves an electrode tab 20 protruding from the packaging bag 11. The battery cell 100 includes an unsealed region 13 and a sealed region 15. The unsealed region 13 is disposed between the electrode assembly 10 and the sealed region 15. The electrode tab 20 is adhesively connected to the sealed region 15 to seal the battery cell 100.

Referring to FIG. 1B, the electrode assembly 10 includes a first end surface 12 and a second end surface 14 opposite to the first end surface 12. The electrode tab 20 protrudes from at least one of the first end surface 12 and the second end surface 14. In some embodiments, the electrode tab 20 includes a soldering region 19 received in the packaging bag 11.

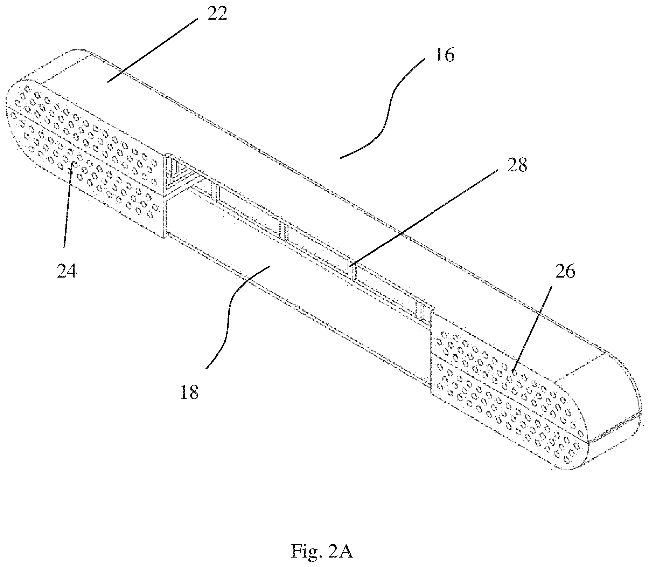

Referring to FIG. 2A, in an embodiment, the battery cell 100 further includes a support assembly 16 disposed between the electrode assembly 10 and the packaging bag 11. In an embodiment, the support assembly 16 is disposed between the electrode assembly 10 and the sealed region 15. A portion of the packaging bag 11 at the unsealed region 13 is punched to form a recess for receiving the support assembly 16.

The support assembly 16 defines a cavity 18 facing the first end surface 12 or the second end surface 14. That is, an opening of the cavity 18 faces the first end surface 12 or the second end surface 14. In an embodiment, the support assembly 16 is disposed between the packaging bag 11 and the first end surface 12. In another embodiment, the support assembly 16 may also be disposed between the packaging bag 11 and the second end surface 14. In other words, the support assembly 16 is disposed at an end of the electrode assembly 10 or at the unsealed region 13 of the battery cell 100. In the present disclosure, a portion of the packaging bag 11 at the unsealed region 13 is punched to form a recess for storing the electrolyte. Moreover, the support assembly 16 is disposed at the end of the electrode assembly 10 (that is, at the unsealed region 13). Thus, the space for storing the electrolyte is prevented from collapsing during the manufacture and the use of the battery cell 100. During the use of the battery cell 100, a sufficient size of the storage space is ensured for the electrolyte without affecting the energy density, the abused safety, and the sealed performance of the battery cell 100.

According to the present invention, the electrode tab 20 protrudes from the first end surface 12 or the second end surface 14. The electrode tab 20 further protrudes from the cavity 18 of the support assembly 16. In other words, the support assembly 16 surrounds a portion of the electrode tab 20. Referring to FIGS. 2A to 2C, the support assembly 16 includes a first component 22 and a second component 24 opposite to the first component 22. The first component 22 and the second component 24 cooperatively define the cavity 18. The electrode tab 20 protrudes from between the first component 22 and the second component 24, that is, the first component 22 and the second component 24 are connected so as to surround a portion of the electrode tab 20. In an embodiment, an end of the electrode tab 20 protrudes from the cavity 18 and then from the packaging bag 11. The soldering region 19 may be received in the cavity 18 of the support assembly 16. Thus, the soldering region 19 of the electrode tab 20 is isolated from the packaging bag 11, thereby preventing the soldering region 19 from piercing the aluminum plastic film and improving the sealed reliability of the battery cell 100. In some embodiments, the second component 24 may also define the cavity 18.

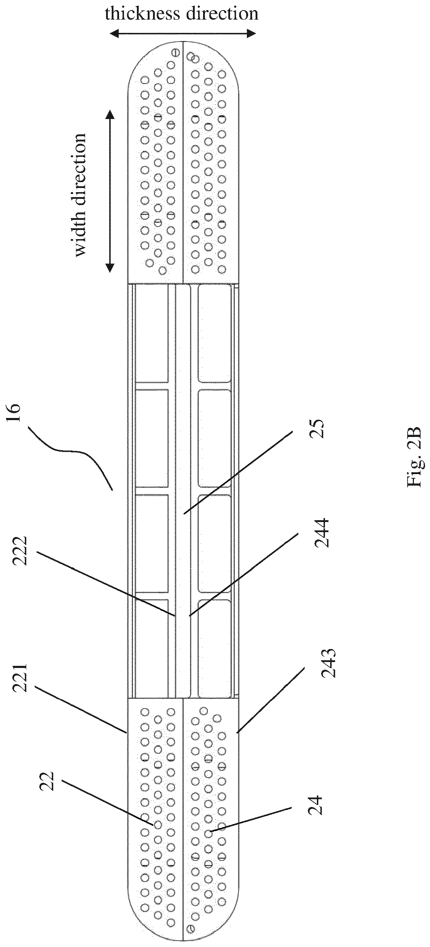

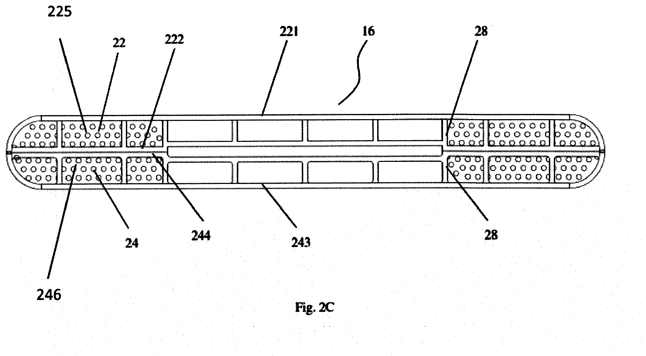

In an embodiment, referring to FIGS. 2B and 2C, the first component 22 includes a first portion 221 and a second portion 222 connected to the first portion 221. The first portion 221 and the second portion 222 cooperatively define a first part of the cavity 18. In an embodiment, the first portion 221 and the second portion 222 are parallel to each other. The second portion 222 is perpendicular to the first end surface 12 or to the second end surface 14. In an embodiment, the second component 24 may include a third portion 243 and a fourth portion 244, which are the same as or similar to the first portion 221 and the second portion 222, respectively. The third portion 243 and the fourth portion 244 may cooperatively define a second part of the cavity 18. The first portion 221 faces the third portion 243. The second portion 222 faces the fourth portion 244. The second portion 222 and the fourth portion 244 cooperatively define an opening 25 for receiving the electrode tab 20. That is, the electrode tab 20 is inserted into the opening 25 and then protrudes from the packaging bag 11.

In an embodiment, at least one of the first portion 221 and the second portion 222 has a plurality of through holes 26. The battery cell 100 further includes an electrolyte received in the packaging bag 11. The through holes 26 further increase the storage amount of the electrolyte in the battery cell 100, thereby improving the cycle life of the battery cell 100. In some embodiments, at least one of the third portion 243 and the fourth portion 244 may also has the through holes 26, which further increases the storage amount of the electrolyte in the battery cell 100.

In an embodiment, the first component 22 further includes a reinforcing rib 28. The reinforcing rib 28 is connected between the first portion 221 and the second portion 222. In some embodiments, the second component 24 may also include the reinforcing rib 28. The reinforcing rib 28 is connected between the third portion 243 and the fourth portion 244. The reinforcing rib 28 increases the strength of the support assembly 16, and prevents the battery from collapsing at the unsealed region 13. In some embodiments, at least one of the first portion 221, the second portion 222, the third portion 243, and the fourth portion 244 may be formed by a plurality of reinforcing ribs 28 which cross each other. Thus, the storage amount of the electrolyte in the battery cell 100 may be further increased, which further improves the cycle life of the battery cell 100.

In an embodiment, the first component 22 further includes two first arc portions 227. Two ends of the first portion 221 are connected to two ends of the second portion 222 through the first arc portion 227. The second component 24 may include two second arc portions 248, which are the same as or similar to the first arc portions 227. Two ends of the third portion 243 are connected to the two ends of the fourth portion 244 through the second arc portions 248. By including the first arc portions 227 and the second arc portions 248, a cross section of the support assembly 16 may be the same as or similar to a cross section of the electrode assembly 10, thereby facilitating the packaging of the battery cell 100. In an embodiment, a thickness of the support assembly 16 is less than or equal to a thickness of the electrode assembly 10. When the thickness of the support assembly 16 is equal to the thickness of the electrode assembly 10, the depth of the punched recess in the packaging bag 11 which receives the support assembly 16 may be equal to the depth of the punched recess in the packaging bag 11 which receives the electrode assembly 10. Furthermore, a width of the support assembly 16 is equal to a width of the electrode assembly 10, thus the width of the punched recess in the packaging bag 11 which receives the support assembly 16 is equal to the width of the punched recess in the packaging bag 11 which receives the electrode assembly 10. When the thickness and the width of the support assembly 16 are respectively equal to the thickness and the width of the electrode assembly 10, each of the first portion 221, the second portion 222, the third portion 243, the fourth portion 244, the first arc portion 227, and the second arc portion 248 may be flush with the electrode assembly 10, which facilitates the packaging of the battery cell 100.

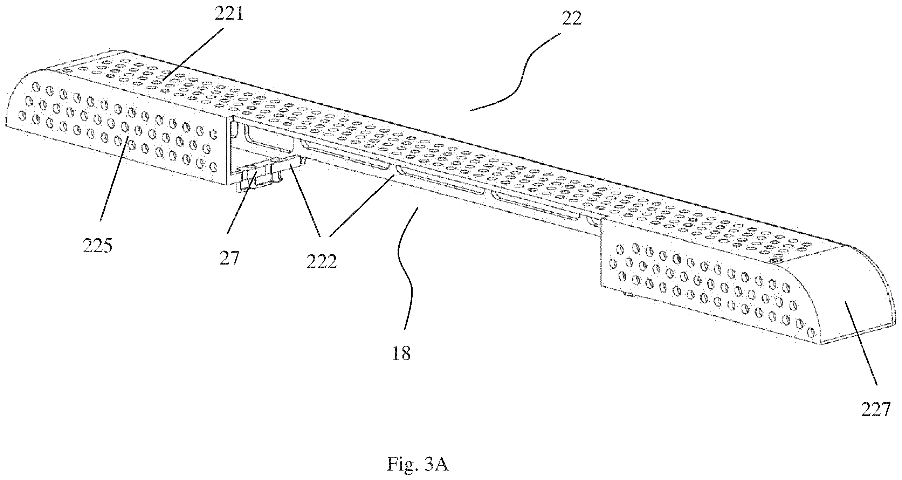

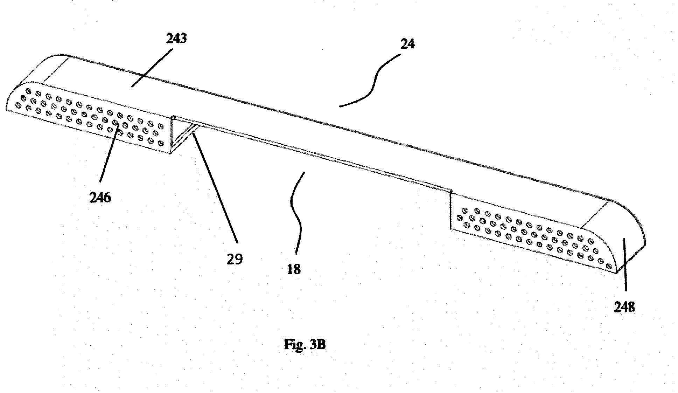

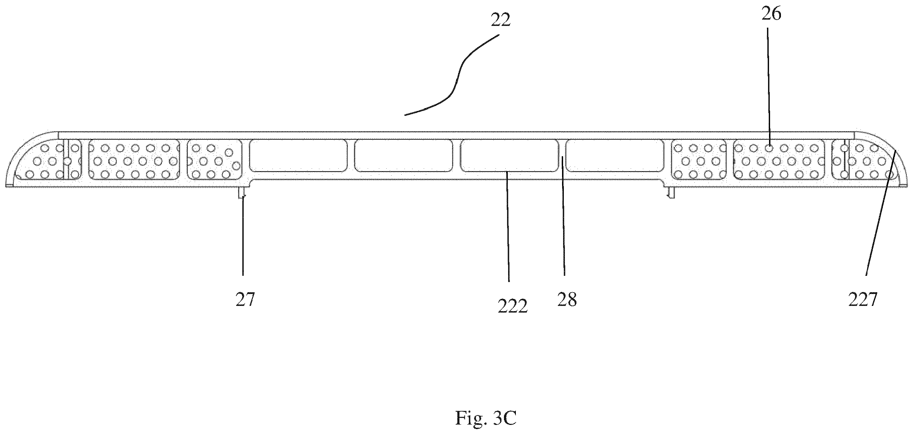

In an embodiment, referring to FIG. 2C and FIGS. 3A to 3C, the first component 22 further includes a fifth portion 225 adjacent to the first end surface 12 or to the second end surface 14. The fifth portion 225 is connected between the first portion 221 and the second portion 222, and also connected to the first arc portion 227. In some embodiments, the fifth portion 225 also defines the through holes 26. In some embodiments, each of two sides of the first component 22 may include the fifth portion 225. In some embodiments, the second component 24 may include a sixth portion 246, which is the same as or similar to that of the fifth portion 225. The sixth portion 246 may be connected between the third portion 243 and the fourth portion 244, and also connected to the second arc portion 248. The sixth portion 246 may face the fifth portion 225, and may be adjacent to the first end surface 12 or the second end surface 15. In an embodiment, the first component 22 and the second component 24 are symmetrical to each other along a connecting surface therebetween.

In an embodiment, the first component 22 is detachably connected to the second component 24, which facilitates the connection between the support assembly 16 and the electrode assembly 20. The manufacturing efficiency is thus improved. In an embodiment, referring to FIGS. 3A to 3C, one of the first component 22 and the second component 24 includes a latch holder 29. The other one includes a latch arm 27 engaged with the latch holder 29. The latch arm 27 and the latch holder 29 may be respectively disposed on the second portion 222 or the fifth portion 225, and the fourth portion 224 or the sixth portion 246.

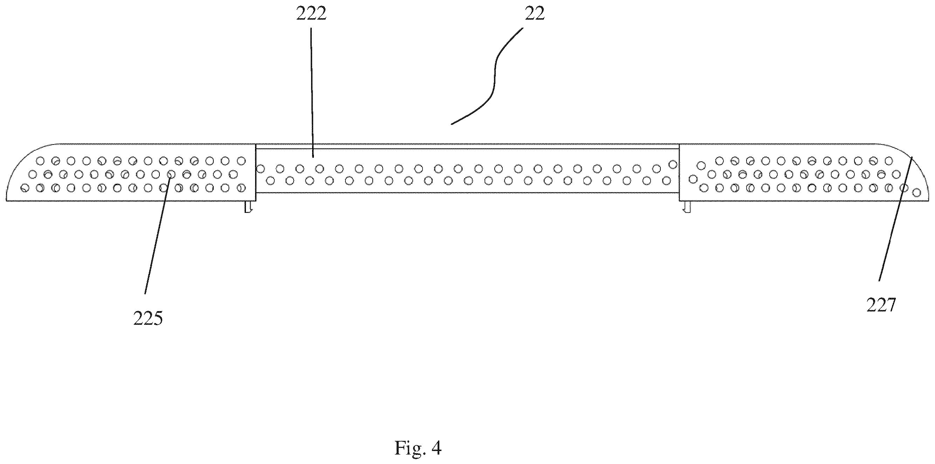

In an embodiment, referring to FIG. 4, each of the first portion 221, the second portion 222, the third portion 243, the fifth portion 225, and the sixth portion 246 defines the through holes 26, which may further increase the storage amount of the electrolyte and improve the cycle life of the battery cell 100. In an embodiment, a sidewall, which also defines the through holes 26, is connected between the first portion 221 and the second portion 222, and between the third portion 243 and the fourth portion 244.

In the present disclosure, during the use of the battery cell 100, the unsealed space in the battery cell is fully utilized, which increases the storage amount of the electrolyte in the battery cell. Thus, during long-term use of the battery cell 100, consumption of the electrolyte may be as required. That is, the cycling life of the battery cell can be improved. Compared with the prior art which increases the width or length of the battery cell, the present disclosure increases the energy density of the battery cell without affecting the sealed performance.

In an embodiment of the present disclosure, the support assembly 16 may isolate the soldering area 19 of the electrode tab 20 from the packaging bag 11, thereby preventing the soldering area 19 from piercing the aluminum plastic film and improving the sealed reliability of the battery cell 100. In an embodiment, the support assembly 16 may be made of polypropylene (PP), and the inner layer of the aluminum plastic film is made of the same material. Thus, the supporting assembly 16 will not undergo any chemical reaction with the electrolyte.

In the present disclosure, the free electrolyte may be retained in the two ends of the battery cell 100 by applying the support assembly 16. Even uneven pressure in the battery cell 100 will not cause uneven distribution of the electrolyte. During the cycling process of the battery cell, the electrolyte continuously immerses the inside of the electrode assembly 10. Thus, there will never be a lack of the electrolyte in the electrode assembly 10.

The disclosure is illustrative only, and changes may be made in the detail, including in matters of shape, size, and arrangement of the parts within the principles of the present disclosure, up to and including the full extent established by the broad general meaning of the terms used in the claims. It will, therefore, be appreciated that the embodiments described above may be modified within the scope of the claims.

## Claims

1. A battery cell (100) comprising:
an electrode assembly (10) comprising a first end surface (12) and a second end surface (14) opposite to the first end surface (12);
a support assembly (16): and
a packaging bag (11) for receiving the electrode assembly (10) and the support assembly (16);
wherein the support assembly (16) is disposed between the electrode assembly the packaging bag (11) and the first end surface (12) or the second end surface (14),
**characterized in that**, the support assembly (16) comprises a first component (22) and a second component (24) opposite to the first component (22) and detachably connected to the first component (22), the first component (22) and the second component (23) cooperate to define a cavity (18) facing the first end surface (12) or the second end surface (14),
the electrode assembly (10) further comprising an electrode tab (20) protruding from the first end surface (12) or the second end surface (14) and protruding from between the first component (22) and the second component (24), and the electrode tab (20) further protruding from the cavity (18) and the packaging bag (11).

2. The battery cell (100) of claim 1, **characterized in that**, one of the first component (22) and the second component (24) comprises a latch holder (29), and the other one of the first component (22) and the second component (24) comprises a latch arm (27) engaged with the latch holder (29).

3. The battery cell (100) of any one of claims 2, **characterized in that**, the first component (22) comprises a first portion (221) and a second portion (222) connected to the first portion (221), the first portion (221) and the second portion (222) cooperatively define a first part of the cavity (18), and at least one of the first portion (221) and the second portion (222) has a plurality of through holes (26).

4. The battery cell (100) of any one of claims 3, **characterized in that**, the first component (22) further comprises a reinforcing rib (28), one end of the reinforcing rib (28) is connected to the first portion (221), and the other end of the reinforcing rib (28) is connected to the second portion (222).

5. The battery cell (100) of any one of claim 3 or 4, **characterized in that**, the first component (22) further comprises two arc portions (227), and two ends of the first portion (221) are connected to two ends of the second portion (222) through the two arc portions (227).

6. The battery cell (100) of any one of claims 3 to 5, **characterized in that**, the second component (24) comprises a third portion (243) and a fourth portion (244) connected to the third portion (243), the third portion (243) and the fourth portion (244) cooperatively define a second part of the cavity (18), and at least one of the third portion (243) and the fourth portion (244) has a plurality of through holes (26).

7. The battery cell (100) of any one of claims 3 to 6, **characterized in that**, the first component (22) further comprises a fifth portion (225) adjacent to the first end surface (12) or the second end surface (14); the fifth portion (225) is connected to the first portion (221), the second portion (222), or to the arc portion (227); and the fifth portion (225) has a plurality of through holes (26).

8. The battery cell (100) of any one of claims 1 to 7, **characterized in that**, a thickness of the support assembly (16) is less than or equal to a thickness of the electrode assembly (10).

9. The battery cell (100) of any one of claims 1 to 8, **characterized in that**, a width of the support assembly (16) is equal to a width of the electrode assembly (10).

10. The battery cell (100) of any one of claims 1 to 9, **characterized in that**, the battery cell (100) further comprises an unsealed region (13) and a sealed region (15), wherein the unsealed region (13) is disposed between the electrode assembly (10) and the sealed region (15), the support assembly (16) is disposed at an end of the electrode assembly (10) or at the unsealed region (13).

11. A battery, **characterized in that**, comprising a battery cell of any one of claims 1 to 10.

## Patentansprüche

1. Batteriezelle (100) umfassend:
eine Elektrodenanordnung (10) mit einer ersten Endoberfläche (12) und einer zweiten, der ersten Endoberfläche (12) gegenüberliegenden Endoberfläche (14);
eine Stützanordnung (16); und
eine Verpackungstasche (11) zur Aufnahme der Elektrodenanordnung (10) und der Stützanordnung (16);
wobei die Stützanordnung (16) zwischen der Elektrodenanordnung, der Verpackungstasche (11) und der ersten Endoberfläche (12) oder der zweiten Endoberfläche (14) angeordnet ist, **dadurch gekennzeichnet, dass** die Stützanordnung (16) eine erste Komponente (22) und eine zweite, der ersten Komponente (22) gegenüberliegende und damit lösbar verbundene Komponente (24) umfasst, wobei die erste Komponente (22) und die zweite Komponente (23) zusammen eine der ersten Endoberfläche (12) oder der zweiten Endoberfläche (14) zugewandte Kammer (18) definieren,
wobei die Elektrodenanordnung (10) weiterhin eine aus der ersten Endoberfläche (12) oder
der zweiten Endoberfläche (14) hervorstehende Elektrodenlasche (20) umfasst, die zwischen der ersten Komponente (22) und der zweiten Komponente (24) sowie aus der Kammer (18) und der Verpackungstasche (11) hervorsteht.

2. Batteriezelle (100) nach Anspruch 1, **dadurch gekennzeichnet, dass** eine der ersten Komponente (22) und der zweiten Komponente (24) einen Rasthalter (29) umfasst und die andere der ersten Komponente (22) und der zweiten Komponente (24) einen mit dem Rasthalter (29) in Eingriff stehenden Rastarm (27) umfasst.

3. Batteriezelle (100) nach einem der Ansprüche 2, **dadurch gekennzeichnet, dass** die erste Komponente (22) einen ersten Teil (221) und einen mit dem ersten Teil (221) verbundenen zweiten Teil (222) umfasst, wobei der erste Teil (221) und der zweite Teil (222) gemeinsam einen ersten Teil der Kammer (18) definieren, und dass mindestens einer des ersten Teils (221) und des zweiten Teils (222) eine Vielzahl von Durchgangslöchern (26) aufweist.

4. Die Batteriezelle (100) nach einem der Ansprüche 3, **dadurch gekennzeichnet, dass** die erste Komponente (22) weiterhin einen Verstärkungsrippen (28) umfasst, wobei ein Ende der Verstärkungsrippe (28) mit dem ersten Teil (221) verbunden ist und das andere Ende der Verstärkungsrippe (28) mit dem zweiten Teil (222) verbunden ist.

5. Batteriezelle (100) nach einem der Ansprüche 3 oder 4, **dadurch gekennzeichnet, dass** die erste Komponente (22) weiterhin zwei Bogenabschnitte (227) umfasst, und dass zwei Enden des ersten Teils (221) über die zwei Bogenabschnitte (227) mit zwei Enden des zweiten Teils (222) verbunden sind.

6. Batteriezelle (100) nach einem der Ansprüche 3 bis 5, **dadurch gekennzeichnet, dass** die zweite Komponente (24) einen dritten Teil (243) und einen mit dem dritten Teil (243) verbundenen vierten Teil (244) umfasst, wobei der dritte Teil (243) und der vierte Teil (244) gemeinsam einen zweiten Teil der Kammer (18) definieren, und dass mindestens einer des dritten Teils (243) und des vierten Teils (244) eine Vielzahl von Durchgangslöchern (26) aufweist.

7. Batteriezelle (100) nach einem der Ansprüche 3 bis 6, **dadurch gekennzeichnet, dass** die erste Komponente (22) weiterhin einen fünften Teil (225) aufweist, der an die erste Endoberfläche (12) oder die zweite Endoberfläche (14) angrenzt, wobei der fünfte Teil (225) mit dem ersten Teil (221), dem zweiten Teil (222) oder dem Bogenabschnitt (227) verbunden ist und der fünfte Teil (225) eine Vielzahl von Durchgangslöchern (26) hat.

8. Batteriezelle (100) nach einem der Ansprüche 1 bis 7, **dadurch gekennzeichnet, dass** eine Dicke der Stützanordnung (16) kleiner oder gleich einer Dicke der Elektrodenanordnung (10) ist.

9. Batteriezelle (100) nach einem der Ansprüche 1 bis 8, **dadurch gekennzeichnet, dass** eine Breite der Stützanordnung (16) gleich einer Breite der Elektrodenanordnung (10) ist.

10. Die Batteriezelle (100) nach einem der Ansprüche 1 bis 9, **dadurch gekennzeichnet, dass** die Batteriezelle (100) weiterhin eine unversiegelte Region (13) und eine versiegelte Region (15) umfasst, wobei die unversiegelte Region (13) zwischen der Elektrodenanordnung (10) und der versiegelten Region (15) angeordnet ist, wobei die Stützanordnung (16) am Ende der Elektrodenanordnung (10) oder an der unversiegelten Region (13) angeordnet ist.

11. Batterie, **dadurch gekennzeichnet dass** sie eine Batteriezelle nach einem der Ansprüche 1 bis 10 umfasst.

## Revendications

1. Elément de batterie (100), comprenant :
un ensemble d'électrode (10) comprenant une première surface d'extrémité (12) et une seconde surface d'extrémité (14), opposée à la première surface d'extrémité (12) ;
un ensemble de support (16), et
un sachet d'emballage (11) pour recevoir l'ensemble d'électrode (10) et l'ensemble de support (16) ;
dans lequel l'ensemble de support (16) est disposé entre l'ensemble d'électrode, le sachet d'emballage (11), et la première surface d'extrémité (12) ou la seconde surface d'extrémité (14),
**caractérisé en ce que** l'ensemble de support (16) comprend un premier composant (22) et un second composant (24), opposé au premier composant (22) et connecté de manière amovible au premier composant (22), le premier composant (22) et le second composant (23) coopèrent pour définir une cavité (18) faisant face à la première surface d'extrémité (12) ou à la seconde surface d'extrémité (14),
l'ensemble d'électrode (10) comprenant en outre une languette d'électrode (20) faisant saillie à partir de la première surface d'extrémité (12) ou de la seconde surface d'extrémité (14), et faisant saillie à partir d'entre le premier composant (22) et le second composant (24), et la languette d'électrode (20) faisant en outre saillie à partir de la cavité (18) et du sachet d'emballage (11).

2. Elément de batterie (100) selon la revendication 1, **caractérisé en ce qu'**un composant parmi le premier composant (22) et le second composant (24) comprend un support de verrou (29), et l'autre composant parmi le premier composant (22) et le second composant (24) comprend un bras de verrou (27) en prise avec le support de verrou (29).

3. Elément de batterie (100) selon la revendication 2, **caractérisé en ce que** le premier composant (22) comprend une première portion (221) et une deuxième portion (222) connectée à la première portion (221), la première portion (221) et la deuxième portion (222) définissent par coopération une première partie de la cavité (18), et au moins une portion parmi la première portion (221) et la deuxième portion (222) présente une pluralité de trous débouchants (26).

4. Elément de batterie (100) selon la revendication 3, **caractérisé en ce que** le premier composant (22) comprend en outre une nervure de renforcement (28), une extrémité de la nervure de renforcement (28) est connectée à la première portion (221), et l'autre extrémité de la nervure de renforcement (28) est connectée à la deuxième portion (222).

5. Elément de batterie (100) selon la revendication 3 ou 4, **caractérisé en ce que** le premier composant (22) comprend en outre deux portions arquées (227), et deux extrémités de la première portion (221) sont connectées à deux extrémités de la deuxième portion (222) par le biais des deux portions arquées (227).

6. Elément de batterie (100) selon l'une quelconque des revendications 3 à 5, **caractérisé en ce que** le second composant (24) comprend une troisième portion (243) et une quatrième portion (244) connectée à la troisième portion (243) ; la troisième portion (243) et la quatrième portion (244) définissent par coopération une seconde partie de la cavité (18) et au moins une portion parmi la troisième portion (243) et la quatrième portion (244) présente une pluralité de trous débouchants (26).

7. Elément de batterie (100) selon l'une quelconque des revendications 3 à 6, **caractérisé en ce que** le premier composant (22) comprend en outre une cinquième portion (225), adjacente à la première surface d'extrémité (12) ou la seconde surface d'extrémité (14) ; la cinquième portion (225) est connectée à la première portion (221), la deuxième portion (222), ou à la portion arquée (227), et la cinquième portion (225) présente une pluralité de trous débouchants (26).

8. Elément de batterie (100) selon l'une quelconque des revendications 1 à 7, **caractérisé en ce qu'**une épaisseur de l'ensemble de support (16) est inférieure ou égale à une épaisseur de l'ensemble d'électrode (10).

9. Elément de batterie (100) selon l'une quelconque des revendications 1 à 8, **caractérisé en ce qu'**une largeur de l'ensemble de support (16) est égale à une largeur de l'ensemble d'électrode (10).

10. Elément de batterie (100) selon l'une quelconque des revendications 1 à 9, **caractérisé en ce que** l'élément de batterie (100) comprend en outre une région non scellée (13) et une région scellée (15), dans lequel la région non scellée (13) est disposée entre l'ensemble d'électrode (10) et la région scellée (15), et l'ensemble de support (16) est disposé sur une extrémité de l'ensemble d'électrode (10) ou sur la région non scellée (13).

11. Batterie **caractérisée en ce qu'**elle comprend un élément de batterie (100) selon l'une quelconque des revendications 1 à 10.
